(19) Europäisches Patentamt
European Patent Office
Office européen des brevets

(11) **EP 2 378 264 B1**

(12) **FASCICULE DE BREVET EUROPEEN**

(45) Date de publication et mention
de la délivrance du brevet:
**13.03.2013 Bulletin 2013/11**

(51) Int Cl.:
**G01N 11/00** *(2006.01)*

(21) Numéro de dépôt: **11161960.7**

(22) Date de dépôt: **11.04.2011**

(54) **Procédé de détermination de la viscosité d'un film mince**

Verfahren zur Bestimmung der Viskosität eines dünnen Films

Method of determining the viscosity of a thin film

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.04.2010 FR 1001545**

(43) Date de publication de la demande:
**19.10.2011 Bulletin 2011/42**

(73) Titulaire: **COMMISSARIAT A L'ENERGIE ATOMIQUE ET AUX ENERGIES ALTERNATIVES 75015 Paris (FR)**

(72) Inventeurs:
• **Landis, Stefan
38500, VOIRON (FR)**
• **Rognin, Etienne
38000, GRENOBLE (FR)**

(74) Mandataire: **Guérin, Michel
Marks & Clerk France
Conseils en Propriété Industrielle
Immeuble Visium
22, Avenue Aristide Briand
94117 Arcueil Cedex (FR)**

(56) Documents cités:
EP-A2- 2 110 360     EP-B1- 0 801 734
FR-A1- 2 936 360     US-A- 5 798 452

**Description**

L'invention concerne un procédé pour déterminer la viscosité de films minces présentant un comportement visqueux à une température de mesure, notamment pour des résines polymères au-delà de leur température de transition vitreuse, mais aussi pour des matériaux minéraux au-delà de leur température de fusion.

Les techniques industrielles classiques de mesure de viscosité ne permettent pas de faire des mesures sur des films très minces, par exemple des films d'épaisseur inférieure à 10 micromètres.

Pour les films très minces, on a proposé différentes solutions de laboratoire et notamment la mesure du nivellement progressif d'un motif périodique imposé dans la couche de film visqueux. Son principe est le suivant : on établit dans le film un motif initial périodique, par exemple un réseau de créneaux linéaires parallèles identiques, régulièrement espacés, ayant chacun une section rectangulaire ; ce motif est par exemple imprimé dans le film à une température où le film est visqueux ; le motif imprimé solidifié est mesuré précisément, par exemple au moyen d'un microscope à force atomique ; on décompose le profil spatial du motif en série de Fourier ; on porte le film à la température à laquelle on désire mesurer la viscosité, pendant une durée déterminée, qu'on peut appeler durée de recuit ; le motif tend à se niveler plus ou moins selon la viscosité du film à la température de mesure ; on refroidit à nouveau le film pour le rendre solide ; on mesure le nouveau profil géométrique du réseau périodique ; on décompose ce profil en série de Fourier ; un calcul à partir du coefficient fondamental de chacune des deux séries de Fourier permet de déterminer un terme caractéristique qui est le rapport entre la viscosité et la tension de surface si on connaît l'épaisseur moyenne du film, la période spatiale du motif, et la durée pendant laquelle le motif a été soumis à la température de mesure ; la tension de surface étant mesurable indépendamment par d'autres techniques, on peut calculer la viscosité.

Si on appelle $a_0$ et $a_{flu}$ les amplitudes respectives du coefficient fondamental de chacune des deux séries de Fourier, on peut écrire que :

$$a_{flu}/a_0 \ = \ exp(-t_{flu}/\tau)$$

où $t_{flu}$ est la durée de recuit et $\tau$ est une constante de temps liée à la viscosité et qui peut s'écrire

$$\tau = 3\eta(1/\gamma h_0^{\,3})(\lambda/2\pi)^4$$

où $\eta$ est la viscosité, $\gamma$ la tension de surface, $\lambda$ la période spatiale du motif périodique (période qui définit la fréquence fondamentale de la série de Fourier), et $h_0$ l'épaisseur moyenne de la couche.

Un des inconvénients de cette méthode est le fait que la mesure de la viscosité par la détermination du rapport $a_{flu}/a_0$ n'a de sens que si ce rapport n'est ni trop proche de 1 ni trop proche de zéro, ce qui revient à dire que si le motif périodique n'a presque pas bougé pendant le temps de recuit $t_{flu}$ ou si le motif est presque aplani après le recuit les imprécisions de mesure seront trop élevées pour aboutir à une détermination fiable de la viscosité.

Il faut donc déterminer à l'avance une géométrie de réseau et une durée de recuit qui vont aboutir à un rapport $a_{flu}/a_0$ qui soit acceptable, par exemple pas trop éloigné de 0,5, ce qui veut dire qu'il faut connaître à l'avance avec une bonne approximation la valeur probable de la viscosité. Il faut en outre que la durée de recuit choisie soit compatible avec les possibilités d'expérimentation pratique : durée assez longue pour permettre une stabilisation de la température du film, mais durée assez brève (moins d'une heure) pour permettre une expérimentation raisonnable.

Pour aider à la mesure dans de bonnes conditions, on propose selon l'invention un procédé de mesure de viscosité d'un matériau en couche mince à au moins une température de mesure Tm, comprenant la formation d'une couche mince du matériau sur un substrat, l'impression, par moulage ou gravure, d'un motif de géométrie connue dans la couche mince, la couche mince étant à l'état solide à la fin de l'étape d'impression, une mesure de la topographie initiale du motif imprimé sur toute la longueur du motif selon une direction déterminée, une mise en température à la température de mesure Tm pendant une durée de fluage déterminée $t_{flu}$, un refroidissement ultérieur à une température de solidification de la couche, une mesure de la topographie résultante du motif flué, et un traitement mathématique des mesures de topographie pour en déduire une valeur de viscosité à la température de mesure, ce procédé étant caractérisé en ce que le motif imprimé de géométrie connue est un motif apériodique.

Par motif apériodique on entend un motif qui ne présente pas de périodicité constante sur toute la longueur de la topographie mesurée dans la direction de mesure. Autrement dit, si on mesure la topographie, c'est-à-dire la courbe de variations de hauteur du motif imprimé, selon un axe Ox, le motif imprimé initial présente une section verticale selon l'axe Ox qui, même si ellel est localement périodique, n'est pas périodique sur toute la longueur du motif selon l'axe Ox.

De préférence, le motif est complètement apériodique, c'est-à-dire qu'il ne comporte pas de zones localisées dans lesquelles le motif aurait une période constante, mais une réalisation avec des zones localement périodiques est possible.

Le motif géométrique imprimé dans la couche mince est de préférence constitué par des sillons parallèles s'étendant dans une direction Oy perpendiculaire à une direction Ox de mesure de topographie et ayant une section rectangulaire dans un plan perpendiculaire à Oy et passant par Ox.

Si on appelle $\lambda(x)$ la distance entre un flanc d'origine d'un sillon d'abscisse x le long de Ox et un flanc d'origine du sillon suivant, on considérera que cette distance $\lambda(x)$ est une "période" variable du motif, par analogie avec la période constante d'un motif périodique qui est aussi une distance entre deux flancs de sillons successifs. On propose selon l'invention que la variation de période $\lambda(x)$ prenne de préférence l'une des formes suivantes :

$$1/\lambda(x) = 1/\lambda_{max} + (1/\lambda_{min} - 1/\lambda_{max})x/L$$

ou

$$\lambda(x) = \lambda_{min}(\lambda_{max}/\lambda_{min})^{x/L}$$

ou

$$\lambda(x) = \lambda_{min} + (\lambda_{max} - \lambda_{min})x/L$$

ou

$$\lambda(x) = \lambda_{min} + (\lambda_{max} - \lambda_{min})(x/L)^{1/4}$$

dans lesquelles $\lambda_{min}$ et $\lambda_{max}$ sont les périodes spatiales (ou distances bord à bord entre sillons) minimale et maximale dans le motif imprimé, et L est la longueur totale du motif.

Le calcul de la viscosité est fait de préférence de la manière suivante :

- on calcule les coefficients de la transformée de Fourier discrète de la topographie mesurée sur le motif imprimé avant fluage,
- on en déduit des coefficients théoriques d'une transformée de Fourier d'une topographie après fluage selon une formule de calcul faisant intervenir un paramètre de viscosité, en faisant varier le paramètre de viscosité, pour aboutir à plusieurs séries de coefficients théoriques liées chacune à une viscosité hypothétique respective,
- on calcule une série de coefficients expérimentaux de la transformée de Fourier de la topographie mesurée après fluage,
- on effectue une recherche de corrélation optimale entre la série de coefficients expérimentaux et les différentes séries de coefficients théoriques, et on en déduit une viscosité fournissant la meilleure corrélation.

La formule de calcul d'un coefficient théorique d'ordre n est de préférence la suivante :

$$a_n^{tflu} = a_n^0 \exp(-t_{flu}/\tau_n)$$

où $a_n^{tflu}$ est le coefficient de Fourier théorique d'ordre n de la topographie après fluage pendant une durée $t_{flu}$, $a_n^0$ est le coefficient d'ordre n de la topographie mesurée sur le motif imprimé après fluage, et $\tau_n$ est un coefficient de relaxation de la couche, lié à la viscosité $\eta$ par la relation

$$\tau_n = 3\eta(1/\gamma h_0^3)(L/2\pi n)^4$$

dans lequel:

$\gamma$ est la tension de surface de la couche mince ; $h_0$ est son épaisseur moyenne ; L est la longueur totale selon la direction Ox du motif imprimé.

Dans une variante de traitement mathématique, on observe la position d'un front de fluage le long d'un motif dont la période varie continûment en reliant mathématiquement la position de ce front de fluage à un instant connu à la valeur de la viscosité. En effet, pour un temps de fluage donné, plus la viscosité est faible, plus le front de fluage se trouve éloigné de l'origine selon l'axe Ox (l'origine étant prise du côté des périodes $\lambda$ les plus courtes). Le front de fluage peut être défini comme une frontière fictive entre une partie fluée et une partie non encore fluée du motif géométrique, frontière pour laquelle la profondeur crête à crête des sillons a été réduite d'un facteur déterminé par rapport à la profondeur du motif d'origine (les sillons ayant tous la même profondeur). Au temps $t_{flu}$ ou à n'importe quel instant, on peut examiner où est ce front. On reviendra plus loin sur la formule mathématique qui permet d'en déduire la viscosité.

Des procédés de mesure de viscosité sont décrits dans les publications de brevet suivantes : US 5 798 452, EP 2 110 360, FR 2936 360, EP 0801 734. Ils n'utilisent pas de motif imprimé apériodique.

D'autres caractéristiques et avantages de l'invention apparaîtront à la lecture de la description détaillée qui suit et qui est faite en référence aux dessins annexés dans lesquels :

- la figure 1 représente en perspective une couche mince solide déposée sur un substrat et conformée selon un motif périodique ;
- la figure 2 représente en coupe verticale cette couche mince après fluage à une température au-delà de la transition vitreuse ;
- la figure 3 représente une couche mince solide conformée selon un motif apériodique ;
- la figure 4 représente en coupe verticale la couche de la figure 3 après fluage à une température au-delà de la transition vitreuse ;
- la figure 5 représente schématiquement les étapes principales du procédé selon l'invention ;
- la figure 6 représente une courbe de hauteur d'un profil flué, montrant l'enveloppe de la courbe et un front de fluage entre une zone fluée et une zone non encore fluée ;
- la figure 7 représente un motif géométrique utilisé dans une expérience ;
- la figure 8 représente les courbes de hauteur tracées dans cette expérience, avant et après fluage.

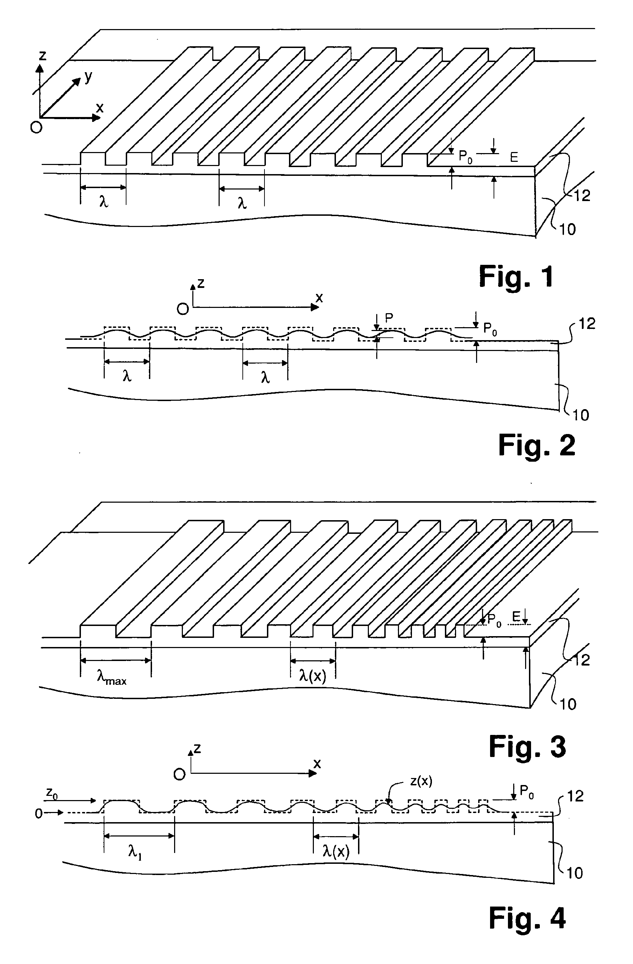

Dans l'art antérieur, pour mesurer la viscosité d'un matériau en couche très mince, par exemple moins de 10 micromètres, on a déposé une couche 12 de ce matériau sur un substrat 10 et on l'a conformée selon un motif de départ périodique tel que représenté à la figure 1 ; ce motif est un réseau de sillons parallèles identiques, allongés selon une direction Oy et tous espacés régulièrement dans une direction Ox avec un pas $\lambda$ qu'on peut appeler "période" spatiale du motif ; les sillons sont à profil rectangulaire et leur profondeur crête à crête est $P_0$. La profondeur $P_0$ est inférieure à l'épaisseur totale E de la couche de manière que les creux des sillons ne soient pas en contact avec le matériau du substrat. La largeur des plateaux qui séparent les sillons peut être égale à la largeur des sillons.

La couche est au départ à l'état solide, c'est-à-dire qu'elle est au départ à une température inférieure à la température de transition visqueuse. Lorsqu'on porte la couche mince à une température de mesure Tm au-delà de la température de transition vitreuse pendant une durée de fluage $t_{flu}$, la couche se nivelle progressivement et d'une manière régulière comme cela est représenté à la figure 2 (le profil de la courbe avant fluage est représenté en pointillés). Partant de sillons rectangulaires d'une profondeur $P_0$, on aboutit à des sillons à profil arrondi, de profondeur crête à crête P. Le rapport entre $P_0$ et P est directement lié à la viscosité, ou plus exactement au rapport entre la viscosité et la tension de surface du matériau puisqu'un matériau de très forte viscosité se déformera moins qu'un matériau de viscosité plus faible, pour la même durée de fluage.

Pour calculer le rapport entre $P_0$ et P, le mieux est de mesurer la courbe de hauteur (mesurée selon un axe vertical Oz au moyen d'un microscope à force atomique), en fonction de la distance horizontale (selon Ox) sur toute la longueur du motif. En faisant une transformée de Fourier de cette mesure, on trouve immédiatement un coefficient d'amplitude pour la fréquence spatiale fondamentale, qui est déterminée par la période $\lambda$ du réseau. La transformée est faite pour la courbe de hauteur de la couche avant fluage et pour la courbe de hauteur de la couche après fluage. Le rapport entre les premiers coefficients de la transformée permet de calculer la viscosité.

En résumé, on utilise aux figures 1 et 2 un motif de départ qui est un simple réseau périodique, dont la transformée de Fourier comprend essentiellement une fréquence fondamentale et ses harmoniques (les harmoniques sont liés au fait que le motif de départ est rectangulaire et non sinusoïdal), seule la fréquence fondamentale étant utilisée pour la détermination de la viscosité.

Selon l'invention, on utilise un réseau apériodique dont le spectre ne peut pas être caractérisé par une fréquence fondamentale d'amplitude importante et ses harmoniques d'amplitudes moins importantes.

Deux types de réseaux apériodiques sont principalement envisagés ici :

- un réseau complètement apériodique, ne présentant pas de zones locales de période spatiale constante ; un tel réseau peut être constitué par un ensemble de sillons parallèles de largeurs et d'espacements continûment variables d'une ligne à la suivante ;
- un réseau partiellement apériodique, présentant des zones successives de période spatiale constante, la période variant d'une zone à la suivante ; un tel réseau peut être constitué par un ensemble de sillons parallèles organisés par groupes successifs juxtaposés, les sillons d'un groupe ayant une largeur et un espacement constants différents de la largeur et l'espacement des autres groupes.

La figure 3 représente en perspective un exemple de réseau de sillons parallèles à "période" spatiale continûment variable le long de l'axe Ox (axe perpendiculaire à la direction d'allongement des sillons). Il s'agit d'un réseau complètement apériodique ; par conséquent le mot "période" est utilisé ici par analogie avec le réseau périodique de l'art antérieur ; la période spatiale est la longueur, dans la direction Ox, d'un sillon et d'un plateau le séparant du sillon suivant, c'est-à-dire la distance qui sépare le début d'un ensemble d'un sillon et d'un plateau adjacent au sillon du début d'un ensemble suivant d'un sillon et d'un plateau. La période spatiale varie selon une fonction $\lambda(x)$ qui peut prendre plusieurs formes sur lesquelles on reviendra plus loin. La période varie entre une valeur $\lambda_{min}$ et une valeur $\lambda_{max}$. La gamme de viscosités qu'on pourra mesurer est d'autant plus grande que le rapport $\lambda_{max}/\lambda_{min}$ est plus grand.

Comme à la figure 1, la profondeur $P_0$ des sillons du motif de départ imprimé sur la couche solidifiée est inférieure à l'épaisseur totale E de la couche.

La figure 4 représente le résultat du fluage du motif de la figure 3 pendant une durée $t_{flu}$ à une température de mesure Tm supérieure à la température de transition vitreuse. Selon la température et la durée du fluage, le profil du réseau est plus ou moins nivelé, mais on peut voir que le nivellement n'est pas uniforme et n'engendre pas une profondeur de sillons constante sur l'ensemble du réseau comme c'était le cas à la figure 2. En effet, là où les lignes sont les plus espacées la profondeur des creux reste pratiquement égale à la profondeur de départ $P_0$, mais là où elles sont moins espacées la profondeur devient très inférieure à $P_0$.

On ne va donc pas s'intéresser à la profondeur des sillons comme on le faisait avec le motif périodique de la figure 1 mais on va s'intéresser au profil complet des variations de hauteur z(x) de la couche en fonction de la position sur l'axe Ox.

On peut prendre comme référence de hauteur 0 le fond des sillons de la couche solide de départ, la hauteur de la couche en haut des plateaux qui séparent les sillons dans le motif de départ étant $z_0 = P_0$, ou bien on peut prendre comme référence de hauteur 0 le bas de la couche mince, la hauteur de la couche dans les sillons étant $E-P_0$ et la hauteur des plateaux étant E.

Selon la viscosité de la couche (pour un temps de fluage $t_{flu}$ donné), on aura des profils de fluage différents, et on voit que même pour de fortes viscosités, on pourra avoir une variation de hauteur significative (ni trop proche du profil de départ ni trop nivelée) là où les lignes sont particulièrement rapprochées, alors que pour de faibles viscosités la variation de hauteur sera plus significative là où les lignes sont les moins rapprochées, la couche étant pratiquement nivelée là où les lignes sont plus rapprochées.

Ceci permet d'analyser des échantillons même si on a peu d'information a priori sur la valeur approchée de la viscosité recherchée.

L'analyse peut être faite par plusieurs moyens, mais dans tous les cas on notera qu'on peut utiliser le même échantillon pour faire plusieurs analyses successives :

- par exemple, plusieurs analyses à une même température de mesure, pour observer d'abord le fluage pendant un première durée et obtenir une première détermination de viscosité, puis recommencer le fluage à partir du point où il était arrivé pour faire une autre détermination de viscosité,
- ou encore plusieurs analyses à des températures de mesure successives différentes pour mesurer la viscosité à ces températures, en commençant par les températures les plus basses.

On décrira plus loin la manière dont on exploite les profils avant et après fluage de hauteurs z(x) de la couche le long de l'axe Ox pour aboutir à une valeur de viscosité malgré le fait que le profil de hauteur est apériodique aussi bien avant fluage qu'après fluage.

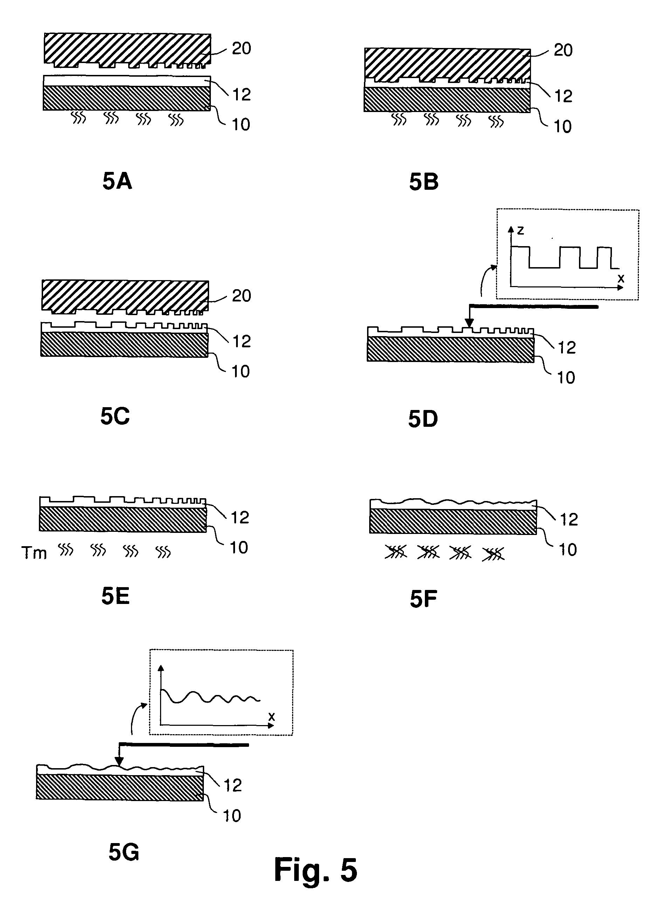

La figure 5 représente les étapes principales du procédé selon l'invention.

On commence par déposer la couche 12 à analyser sur un substrat 10. Dans le cas d'une couche organique polymère, la couche peut être déposée par exemple par centrifugation ("spin-coating" en anglais) ou par pulvérisation. Si la couche est mélangée à un solvant pour faciliter le dépôt, la couche est ensuite recuite pour éliminer le solvant, puis elle est refroidie à température ambiante pour former un film solide d'épaisseur constante sur le substrat.

L'épaisseur moyenne $h_0$ de la couche est mesurée, par exemple par des techniques ellipsométriques. La mesure peut être faite sur la couche dans l'état solidifié ou dans l'état visqueux.

En 5A : on chauffe le substrat et la couche avant d'imprimer à la surface de celle-ci un motif de départ apériodique de géométrie connue qui peut être celui de la figure 3.

En 5B : on imprime le motif à chaud dans la couche au moyen d'un moule 20 gravé selon le motif désiré. Le chauffage est fait à une température de liquéfaction suffisante pour que la couche prenne exactement la forme du moule : température au-delà de la température de transition vitreuse ou même au-delà de la température de fusion pour un matériau minéral, mais bien sûr au-dessous de sa température de dégradation ou d'ébullition. La température de moulage est indépendante de la température de mesure pour laquelle on souhaite mesurer la viscosité. La profondeur des empreintes du moule est inférieure à l'épaisseur de la couche à imprimer ($P_0 < E$) conformément à la figure 3.

En 5C : on refroidit le moule jusqu'à une température de solidification de la couche mince (qui peut être la température ambiante) et on démoule pour obtenir le motif de départ sur la couche solidifiée 12.

L'impression du motif dans la couche pourrait également être obtenue, notamment pour les matériaux minéraux, par un procédé photolithographique avec un masque définissant le motif, ou encore par une gravure au moyen d'un faisceau électronique commandé en fonction du motif à réaliser.

Le moule lui-même sera réalisé par des techniques de lithographie avec ou sans masque, avec une résolution aussi élevée que possible.

En 5D : on trace la courbe de hauteur z(x) de l'échantillon ainsi préparé. Cette courbe représente les variations de hauteur de la surface de la couche mince le long de l'axe OX perpendiculaire aux lignes du motif imprimé dans la couche. On suppose pour simplifier que le motif comprend des lignes parallèles de section constante en Oy, c'est-à-dire qu'on peut considérer que le motif est bidimensionnel, mais le procédé serait transposable à un motif en trois dimensions dans lequel la hauteur varierait non seulement selon Ox mais aussi selon Oy perpendiculaire à Ox et Oz. On peut par exemple envisager un réseau croisé de lignes et de colonnes, le réseau de lignes étant complètement apériodique ou partiellement apériodique et le réseau de colonnes étant périodique ou apériodique.

La mesure des hauteurs le long de Ox est faite de préférence par un microscope à force atomique ou un microscope à pointe à effet tunnel (microscope STM de l'anglais "scanning tunnel microscope") ; ces microscopes permettent de faire des mesures de hauteur de topographie avec des précisions de l'ordre du nanomètre.

En 5E : on chauffe la couche mince à la température de mesure Tm pour laquelle on veut connaître la viscosité, pendant une durée de fluage $t_{flu}$. La durée de fluage est choisie de manière très approximative en fonction de ce qu'on sait de la viscosité de la couche mince à la température Tm, mais le réseau apériodique permet une mesure dans une large gamme de viscosités, donc dans une large gamme de durées de fluage.

En 5F : on interrompt le chauffage et on refroidit rapidement la couche mince pour qu'elle se solidifie dans un état partiellement nivelé (mais bien sûr pas complètement nivelé).

En 5G : on trace à nouveau une courbe de hauteur z(x) de l'échantillon selon la même ligne parallèle à Ox que lors de la première mesure et selon la même référence et la même échelle de hauteur. Le même outil de mesure, microscope atomique ou microscope STM est utilisé.

Comme indiqué ci-dessus, les étapes 5E, 5F, 5G peuvent être répétées plusieurs fois

- avec la même température et la même durée, pour poursuivre le fluage,
- ou avec la même température et des durées différentes,
- ou avec une température différente et la même durée ou des durées différentes.

Dans la suite on considéra un seul groupe d'étapes 5E, 5F, 5G.

Une comparaison des courbes avant et après fluage permet de tirer des enseignements sur la viscosité.

Cette comparaison est de préférence faite en effectuant une transformée de Fourier discrète des courbes de hauteur avant et après fluage.

La hauteur de la couche (c'est-à-dire de la surface supérieure de la couche) est décrite par une fonction z(x) strictement positive. La longueur de la totalité du motif selon l'axe Ox est L. Cette longueur est choisie en fonction des possibilités des moyens de mesure ; par exemple L = 40 ou 50 micromètres pour une mesure par microscope à force atomique, ou plusieurs centaines de micromètres pour une mesure par un profilomètre ou par un microscope optique.

On suppose, contrairement à ce qui a été représenté sur les différentes figures pour leur lisibilité, que les variations de hauteur de la couche sont faibles devant l'épaisseur moyenne de la couche.

Les transformées de Fourier de la courbe de hauteur sont faites dans les mêmes conditions pour la courbe avant fluage et la courbe après fluage. Elles aboutissent chacune à N coefficients (même nombre N pour les deux courbes). Le coefficient d'ordre n de la transformée de Fourier de la courbe de départ avant fluage est noté $a_n^0$ et le coefficient d'ordre de n de la transformée de Fourier à l'instant $t_{flu}$ (fin du fluage) est noté $a_n^{tflu}$.

En faisant des hypothèses simplificatrices, on peut montrer que la valeur théorique de ce coefficient d'ordre n dépend de la viscosité $\eta$ ; cette valeur théorique est notée $a_n^{tflu}(\eta)$ et elle est telle que :

$$a_n^{tflu}(\eta) \,/\, a_n^0 = exp(\text{-}t_{flu}/\tau_n)$$

où $\tau_n$ est un temps caractéristique de relaxation propre au coefficient d'ordre n de la transformée de Fourier. Et on peut montrer que ce temps de relaxation peut être approché par

$$\tau_n = 3\eta(1/\gamma h_0^3)(L/2\pi n)^4$$

où $\eta$ est la viscosité, $\gamma$ la tension de surface de la couche à la température considérée (supposée connue si on recherche la viscosité, mais n'ayant pas besoin d'être connue si on recherche seulement le rapport $\eta/\gamma$), $h_0$ l'épaisseur moyenne de la couche, L la longueur totale du motif.

Comme on ne connaît pas la viscosité, on va faire des calculs théoriques avec une série de valeurs de viscosités différentes et effectuer une recherche de corrélation pour trouver quelle est la viscosité optimale $\eta_{opt}$ qui fournit une série de coefficients théoriques $a_n^{tflu}(\eta_{opt})$ la plus proche de la série de valeurs $a_n^{tflu}$ obtenues par transformée de Fourier de la courbe de hauteur effectivement mesurée après fluage.

On fera donc d'abord varier la valeur de la viscosité (ou le rapport $\eta/\gamma$), en recherchant pour chaque valeur de viscosité, à partir de la transformée de Fourier de la courbe de hauteur initiale, une série de coefficients théoriques $a_n^{tflu}(\eta)$. On fera en parallèle la transformée de Fourier de la courbe mesurée expérimentalement pour obtenir une série de coefficients $a_n^{tflu}$. Puis on recherchera la valeur optimale de viscosité qui fait coïncider les deux séries le mieux possible.

Le rapport $\lambda_{max}/\lambda_{min}$ entre ces valeurs minimale et maximale détermine le rapport entre des viscosités maximales et minimale qu'on pourra mesurer avec le motif pour un temps de fluage donné. $\lambda_{min}$ est déterminé par les possibilités de résolution de la technologie utilisée pour imprimer le motif dans la couche. $\lambda_{max}$ doit être petit devant L, de préférence au moins 5 à 10 fois plus petit. Le critère de résolution peut s'exprimer de la manière suivante : il faut que le produit de $\lambda_{min}$ par le taux d'accroissement $d\lambda/dx$ de la période par unité de distance selon l'axe Ox soit supérieur ou égal à deux fois la résolution (qu'on peut appeler $\delta r$) permise par la technologie :

$$\lambda_{min}.d\lambda/dx >= 2\delta r$$

(le taux d'accroissement $d\lambda/dx$ considéré ici est le taux à l'endroit où la période est $\lambda_{min}$)

On choisira de préférence un rapport de périodes maximale et minimale $\lambda_{max}/\lambda_{min}$ en fonction d'une gamme de viscosité à mesurer (à température de fluage et durée de fluage constantes), puis une valeur $\lambda_{min}$ satisfaisant le critère de résolution, et on vérifiera que le profil de variation choisi pour passer de $\lambda_{min}$ à $\lambda_{max}$ aboutit à une valeur $\lambda_{max}$ suffisamment faible devant la longueur totale L du motif. Si ce n'est pas le cas, on diminue le rapport $\lambda_{max}/\lambda_{min}$ et on recommence.

Les exemples qui suivent montrent plusieurs types de motifs, c'est-à-dire de profils de variations de la période selon l'axe Ox, qu'on peut utiliser avantageusement selon l'invention.

1. Motif à densité spectrale homogène

L'homogénéité de la densité spectrale permet d'exploiter aussi bien les petites périodes du motif que les grandes.

On peut obtenir une telle homogénéité en faisant varier la période $\lambda(x)$ par exemple selon la formule

$$1/\lambda(x) = 1/\lambda_{max} + (1/\lambda_{min} - 1/\lambda_{max})x/L$$

2. Motif pour un front de fluage à vitesse constante.

On considère un motif dont la période varie continûment, par exemple en diminuant progressivement de la gauche vers la droite. Au cours du recuit à température Tm, le fluage se fera sentir d'abord à droite, là où la période est la plus petite, puis progressivement de plus en plus vers la gauche. Une méthode de mesure de la viscosité peut consister à observer au microscope l'évolution de cette extension progressive de la zone fluée, de la droite vers la gauche. On peut par exemple définir un front de fluage qui est une position variant en fonction du temps le long de l'axe Ox et qui représente schématiquement la frontière entre une zone déjà fluée et une zone encore non fluée, et on observe le déplacement de ce front de fluage au cours du temps.

On peut montrer que si la variation de période en fonction de x est faible (par exemple $d\lambda/dx$ est inférieure ou égale à $10^{-3}$) alors le profil de hauteur $z(x)$ est modulé par une enveloppe d'amplitude proportionnelle à $\exp[-t/\tau(x)]$ où $\tau(x)$ est la constante de temps correspondant à la période $\lambda(x)$ : $\tau(x) = 3\eta(1/\gamma h_0^3)[\lambda(x)/2\pi]^4$. Cela revient à dire que la constante de relaxation locale en x est la même que si le motif était périodique et avait une période spatiale $\lambda(x)$.

Dans ce cas, on peut définir arbitrairement un front de fluage et observer son déplacement. Le front de fluage est l'abscisse selon Ox pour laquelle l'amplitude relative est diminuée d'un facteur $e^{-\alpha}$ par rapport à l'amplitude des créneaux du motif initial. Le coefficient $\alpha$ peut être choisi arbitrairement et dépendra du dispositif de mesure utilisé pour faire l'observation. Par exemple, si $\alpha = 3$, on considérera que la position du front de fluage est celle pour laquelle le motif a diminué de 5%, mais on pourrait choisir une autre valeur, par exemple $\alpha = 0,69$ pour définir le front de fluage par l'endroit où l'amplitude a diminué de 50%. L'abscisse du front de fluage est $x_a(t)$ à un instant t.

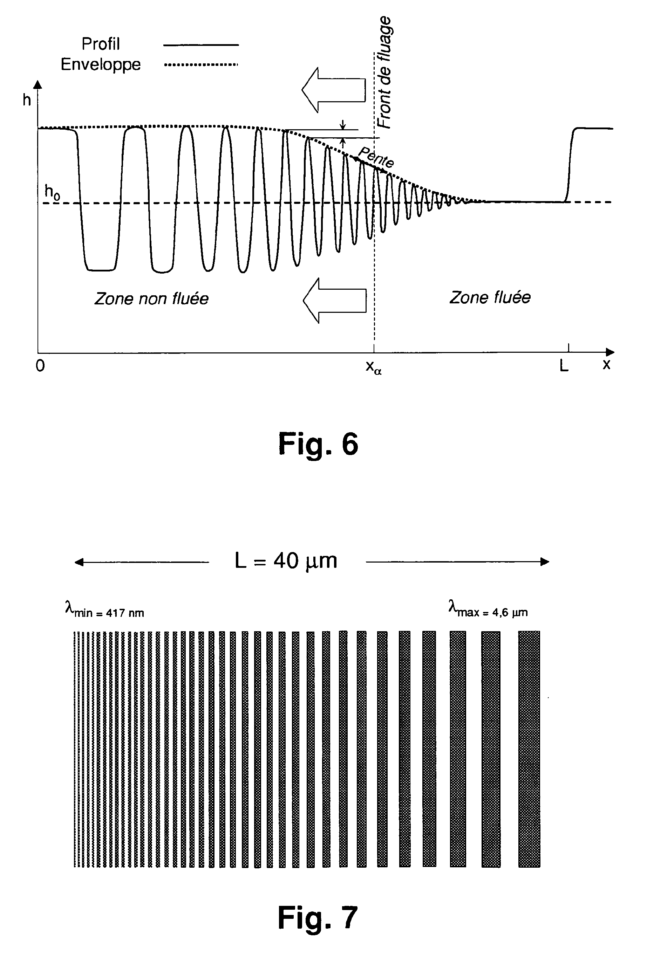

La figure 6 illustre un exemple de profil d'un motif à un instant t après le début du chauffage à la température de mesure Tm. Le front de fluage a été placé à un endroit correspondant à un coefficient $\alpha = 0,69$.

On peut utiliser une caméra vidéo pour mesurer la vitesse de déplacement du front de fluage au cours du temps.

On peut montrer qu'en choisissant un motif dont la période varie selon la forme

$$\lambda(x) = \lambda_{min} + (\lambda_{max} - \lambda_{min})(x/L)^{1/4}$$

on obtient le résultat intéressant que la vitesse du front de fluage le long du motif est constante et que cette vitesse est égale à $L/\alpha.\tau(L)$ où $\tau(L)$ est la constante de relaxation à l'abscisse L, c'est-à-dire à l'endroit où la période du motif est la plus petite ($\lambda_{min}$)

$$\tau(L) = 3\eta(1/\gamma h_0^3)[\lambda_{min}/2\pi]^4$$

A partir de la vitesse observée on peut donc remonter à la viscosité.

Cette forme de variation de période peut aussi être adoptée lorsqu'on fait une recherche de valeur de viscosité par des calculs de transformée de Fourier et une optimisation par corrélation entre des valeurs théoriques de coefficients et des valeurs résultant d'une mesure de hauteurs (cf précédemment).

### 3. Motif pour une pente maximale au front de fluage

Pour avoir un fort contraste entre la zone fluée (à droite sur la figure 6) et la zone non encore fluée (à gauche), il faut une forte pente de l'enveloppe à l'endroit du front de fluage, et ceci à tout moment du fluage.

On peut montrer qu'on y parvient en utilisant un motif apériodique dont la période locale $\lambda(x)$ varie exponentiellement de $\lambda_{min}$ à $\lambda_{max}$ :

$$\lambda(x) = \lambda_{min}(\lambda_{max}/\lambda_{min})^{x/L}$$

### 4. Motif pour une différence de hauteur constante au front de fluage

La différence de hauteur crête à crête entre deux créneaux consécutifs est un paramètre intéressant, qui se confond à peu près avec la pente, en tous cas pour les plus petites périodes du motif. Si on veut que la différence de hauteur crête à crête soit constante au cours du temps, on peut montrer qu'il faut choisir une variation linéaire de la période $\lambda(x)$ :

$$\lambda(x) = \lambda_{min} + (\lambda_{max} - \lambda_{min})x/L$$

Un avantage de l'invention est le fait que la gamme de viscosités mesurables dépend non seulement du rapport entre les temps de fluage minimal et maximal ($t_{max}$ et $t_{min}$) que l'expérimentation permet d'utiliser (en pratique $t_{min}$ est de l'ordre d'une minute et $t_{max}$ est de l'ordre d'une heure), mais aussi du rapport entre les périodes $\lambda_{max}$ et $\lambda_{min}$ du motif et plus précisément de ce rapport élevé à la puissance 4.

$$\eta_{max}/\eta_{max} = (t_{max}/t_{min}).(\lambda_{max}/\lambda_{min})^4$$

Si $\lambda_{max}/\lambda_{min}$ est égal à 2, la gamme de viscosités mesurables est multipliée par 16 ; si Si $\lambda_{max}/\lambda_{min}$ est égal à 10, la gamme de viscosités mesurables est multipliée par 10 000.

En outre, on peut placer sur un même substrat plusieurs motifs géométriques différents ayant des gammes de périodes adjacentes ou recouvrantes. Par gammes adjacentes pour deux motifs A et B on entend le fait que la période maximale $\lambda^A_{max}$ d'un motif A est égale à la période minimale $\lambda^B_{min}$ d'un motif B. Par gammes recouvrantes, on entend le fait que la période maximale $\lambda^A_{max}$ d'un motif A est supérieure à la période minimale $\lambda^B_{min}$ d'un motif B mais inférieure à la période maximale $\lambda^B_{max}$ du motif B.

Le recouvrement est utile pour conforter une mesure. Un recouvrement trop grand serait cependant inutile. Une solution intéressante peut être, dans le cas où on a trois motifs A, B, C avec des gammes de périodes $\lambda_{min}$, $\lambda_{max}$ recouvrantes, que le recouvrement de gammes de période soit complet (recouvrement de gammes partout) mais unique ou non-redondant, c'est-à-dire qu'il n'y a pas de valeur de période qui appartiendrait aux trois motifs.

On parvient à ce dernier résultat, avec des motifs ayant une gamme de périodes ($\lambda_{min}$, $\lambda_{max}$) telle que $\lambda_{max}/\lambda_{min}$ = R constant pour tous les motifs et en prévoyant que la période minimale $\lambda_{min}$ d'un motif B soit égale à $R^{1/2}$ fois la période minimale d'un motif A.

Dans ce qui précède on a considéré que la variation de période $\lambda$ (x) était continue, mais dans une réalisation particulière, on considère que le motif apériodique est constitué par une succession de sous-motifs périodiques adjacents ayant des périodes distinctes les unes des autres réparties entre deux périodes spatiales minimale et maximale $\lambda_{min}$ et $\lambda_{max}$. Les principes exposés ci-dessus pour le calcul de viscosité à partir des transformées de Fourier discrètes restent applicables. La variation de période entre $\lambda_{min}$ et $\lambda_{max}$ est devenue une fonction en escalier.

A titre d'illustration, on va décrire comment l'invention permet de mesurer la viscosité à 120°C d'une couche mince de polystyrène 30k (masse molaire 30kg/mole).

On connaît la tension de surface de ce matériau à 120°C ; elle est de $\gamma$ = 32mN/m.

On utilisera un microscope à force atomique pour déterminer les profils selon Ox du motif imprimé dans la couche mince. La longueur maximale d'une mesure de l'appareil utilisé est de 40 micromètes.

Le motif sera imprimé par un moule de résolution 5 nanomètres.

On pourrait choisir dans ce cas de préférence un motif géométrique dont la période $\lambda(x)$ varie en fonction de l'abscisse x selon une fonction qui tend à homogénéiser la densité spectrale, comme la fonction (mentionnée précédemment) définie par l'équation $1/\lambda(x) = 1/\lambda_{max} + (1/\lambda_{min} - 1/\lambda_{max})x/L$. On peut aussi choisir d'autres motifs également satisfaisants, et on choisit dans cet exemple celui qui est défini par l'équation (mentionnée précédemment) $\lambda(x) = \lambda_{min}(\lambda_{max}/\lambda_{min})^{x/L}$

On choisit par ailleurs arbitrairement un rapport $\lambda_{max}/\lambda_{min}$ égal à 10.

Le critère de résolution exposé plus haut implique que le produit de $\lambda_{min}$ par la dérivée en x de $\lambda(x)$ (pour $\lambda = \lambda_{min}$) soit supérieur à deux fois la résolution, donc supérieur ou égal à 10 nanomètres dans cet exemple. Or la dérivée de la fonction $\lambda(x)$ pour $\lambda = \lambda_{min}$ c'est-à-dire pour x = 0 dans ce cas est ici égale à $\lambda_{min}[ln(\lambda_{max}/\lambda_{min})]/L$.

On en conclut qu'il faut avoir $\lambda^2_{min}[ln(\lambda_{max}/\lambda_{min})]/L$ supérieur ou égal à 10 nanomètres (deux fois la résolution), et on trouve $\lambda_{min}$ au moins égal à 417 nanomètres.

On obtient alors $\lambda_{max}$ de 4,17 micromètres, qui reste faible devant la longueur de mesure L= 40 micromètres.

Si ce n'était pas le cas, on réduirait le rapport $\lambda_{max}/\lambda_{min}$ et on referait le calcul.

La figure 7 représente une configuration de moule permettant d'imprimer le motif correspondant sur un échantillon de substrat recouvert d'une couche de polystyrène. Le moule peut être réalisé par photolithographie. La profondeur des sillons imprimés est de 45 nanomètres.

Le polystyrène est déposé de préférence sur un substrat de silicium par centrifugation. Pour cela, il peut être dilué à 2% dans du toluène. La vitesse de rotation du substrat peut être de 1000 tours par minute. Un recuit à 150°C permet d'évaporer ensuite le toluène. Le film obtenu est homogène et plan. Son épaisseur totale mesurée par ellipsométrie est de 147 nanomètres dans l'expérience réalisée. L'épaisseur moyenne du film est de 125 nanomètres.

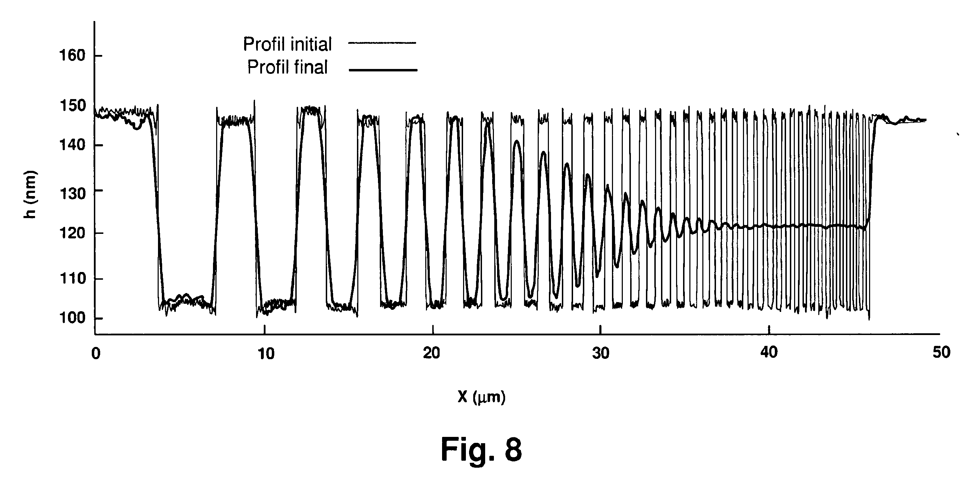

Le motif géométrique de la figure 7 est imprimé grâce au moule, chauffé à 170°C, avec une pression de contact de 13 bars pendant 5 minutes. Le moule est refroidi à température ambiante et l'échantillon est démoulé. Une première mesure au microscope à force atomique donne un profil initial qui est représenté sur la figure 8 (ligne plus fine). Si la variation de période en fonction de x était en escalier on aurait une autre courbe de départ.

Le film est porté à une température de mesure Tm qui dans cet expérience est de 120°C, pendant un temps de fluage $t_{flu}$ qui dans cet exemple est de 5 minutes. Le film est ensuite refroidi brutalement (1 seconde) à température ambiante pour figer le motif obtenu à la fin du temps de fluage.

Le profil flué est mesuré au microscope atomique et aboutit à la courbe de hauteur de la figure 8 (ligne plus épaisse).

Le traitement mathématique des courbes de la figure 8 comprend d'abord la transformée de Fourier discrète de ces courbes, donnant des coefficients pour chaque profil. Le coefficient d'ordre n est $a_n^0$ pour la courbe de départ et $a_n^{tflu}$ pour la courbe après fluage.

On calcule, pour chaque valeur de viscosité $\eta$ prises parmi une série de valeurs possibles, un temps de relaxation $\tau_n = 3\eta(1/\gamma h_0^3)(L/2\pi n)^4$.

De ce temps de relaxation dépendant de n et de $\eta$ on déduit des coefficients de Fourier théoriques par la formule

$$a_n^{tflu}(\eta) = a_n^0 \exp(-t_{flu}/\tau_n).$$

On aboutit, pour chaque valeur d'hypothèse de viscosité une série de coefficients de Fourier attendus.

On compare cette série à la série de coefficients $a_n^{tflu}$ calculés àa partir de la courbe de hauteur mesurée expérimentalement après fluage.

Et on détermine quelle est la viscosité optimale $\eta_{opt}$ qui fait le mieux correspondre la série résultant de l'hypothèse de viscosité avec la série de valeurs calculées à partir de la mesure expérimentale. Cette valeur optimale $\eta_{opt}$ est une estimation de la viscosité réelle de la couche mince.

Dans l'expérience menée ci-dessus, on a trouvé optimale $\eta_{opt} = 6.4 \times 10^6$ Pa.s.

On notera que l'on peut mesurer par cette méthode non seulement la viscosité mais encore le module d'élasticité du matériau en couche mince.

Par exemple, un polymère fondu à une température proche de sa température de transition vitreuse (Tg) a un comportement qualifié de viscoélastique (par exemple le polystyrène à la température Tg de +20°C).

Pour les sollicitations mécaniques basses fréquences (c'est-à-dire aux temps longs, quelques minutes par exemple), le matériau a un comportement de fluide visqueux : il s'écoule. En revanche, pour les sollicitations rapides (temps courts, quelques secondes pour notre exemple), le matériau a un comportement élastique : il se déforme sans s'écouler et restitue l'énergie de déformation comme un ressort. Cette dichotomie des comportements entre temps courts et temps longs est mesurée par un temps caractéristique, noté $\tau_{relax}$, qui est le temps caractéristique de relaxation des contraintes élastiques. Ce temps intervient dans la modélisation du fluage d'un film mince nanostructuré, via le temps caractéristique de décroissance du mode n, exprimé dans le cas purement visqueux par la formule utilisée précédemment : $\tau_n = 3\eta(1/\gamma h_0^3)(L/2\pi n)^4$

avec $\eta$ la viscosité, $\gamma$ la tension de surface, $h_0$ l'épaisseur moyenne du film et L la longueur du profil mesuré. Dans la modélisation la plus simple de la viscoélasticité, nous aurons une formule légèrement différente dans laquelle intervient le temps caractéristique de relaxation des contraintes élastiques $\tau_{relax}$ :

$$\tau_n = \tau_{relax} + 3\eta(1/\gamma h_0^3)(L/2\pi n)^4$$

On peut comme précédemment effectuer une recherche de corrélation optimale en partant d'hypothèses de valeurs de la viscosité $\eta$ et du temps $\tau_{relax}$ et aboutir à un couple optimal de valeurs $\eta_{opt}$, $\tau_{relax\text{-}opt}$.

On calcule alors le module d'élasticité E du matériau par la formule : $E = \eta_{opt}/\tau_{relax\text{-}opt}$.

Le procédé utilise donc en résumé les mêmes étapes de calcul que précédemment, avant de calculer le module d'élasticité ; ces étapes sont : calcul d'un coefficient théorique d'ordre n de la transformée de Fourier pour une viscosité hypothétique $\eta$

$$a_n^{tflu}(\eta) = a_n^0 \exp(-t_{flu}/\tau_n)$$

où $a_n^{tflu}(\eta)$ est le coefficient de Fourier théorique d'ordre n de la topographie après fluage pendant une durée $t_{flu}$, $a_n^0$ est le coefficient d'ordre n de la topographie mesurée sur le motif imprimé après fluage, et $\tau_n$ est un coefficient de relaxation de la couche, lié à la viscosité $\eta$ par la relation

$$\tau_n = \tau_{relax} + 3\eta(1/\gamma h_0^3)(L/2\pi n)^4$$

dans lequel:

$\gamma$ est la tension de surface de la couche mince ; $h_0$ est son épaisseur moyenne, et L est la longueur totale du motif imprimé, et $\tau_{relax}$ est un temps caractéristique de relaxation de contraintes élastiques, le calcul étant effectué pour différentes viscosités hypothétiques $\eta$ et différents temps caractéristiques $\tau_{relax}$ et un couple d'une viscosité $\eta_{opt}$ et d'un temps caractéristique optimal $\tau_{relax-opt}$ étant sélectionné dans la recherche de corrélation optimale.

**Revendications**

1.  Procédé de mesure de viscosité d'un matériau en couche mince à au moins une température de mesure Tm, comprenant la formation d'une couche mince (12) du matériau sur un substrat (10), l'impression, par moulage ou gravure, d'un motif de géométrie connue dans la couche mince, la couche mince étant à l'état solide à la fin de l'étape d'impression, une mesure de la topographie initiale du motif imprimé sur toute la longueur du motif selon une direction déterminée, une mise en température à la température de mesure Tm pendant une durée de fluage déterminée $t_{flu}$, un refroidissement ultérieur à une température de solidification de la couche, une mesure de la topographie résultante du motif flué, et un traitement mathématique des mesures de topographie pour en déduire une valeur de viscosité à la température de mesure, ce procédé étant **caractérisé en ce que** le motif imprimé de géométrie connue est un motif apériodique.

2.  Procédé selon la revendication 1, **caractérisé en ce que** le motif est complètement apériodique et ne comporte pas de zones localement périodiques.

3.  Procédé selon la revendication 1, **caractérisé en ce que** le motif est partiellement apériodique et comporte des sous-motifs localement périodiques ayant des périodes distinctes les unes des autres.

4.  Procédé selon l'une des revendications 1 à 3, **caractérisé en ce que** le motif géométrique imprimé dans la couche mince est constitué par des sillons parallèles s'étendant dans une direction Oy perpendiculaire à une direction Ox de mesure de topographie et ayant une section rectangulaire dans un plan perpendiculaire à Oy et passant par Ox, les sillons parallèles ayant une période spatiale $\lambda(x)$ variable le long de l'axe Ox, la période spatiale étant la longueur, dans la direction Ox, d'un sillon et d'un plateau le séparant du sillon suivant.

5.  Procédé selon la revendication 4, **caractérisé en ce que** la variation de période $\lambda(x)$ est conforme à la fonction :

$$1/\lambda(x) = 1/\lambda_{max} + (1/\lambda_{min} - 1/\lambda_{max})x/L$$

dans laquelle $\lambda_{min}$ et $\lambda_{max}$ sont les périodes spatiales minimale et maximale dans le motif imprimé, et L est la longueur totale du motif.

6.  Procédé selon la revendication 4, **caractérisé en ce que** la variation de période $\lambda(x)$ est conforme à la fonction :

$$\lambda(x) = \lambda_{min}(\lambda_{max}/\lambda_{min})^{x/L}$$

dans laquelle $\lambda_{min}$ et $\lambda_{max}$ sont les périodes spatiales minimale et maximale dans le motif imprimé, et L est la longueur totale du motif.

7.  Procédé selon la revendication 4, **caractérisé en ce que** la variation de période $\lambda(x)$ est conforme à la fonction :

$$\lambda(x) = \lambda_{min} + (\lambda_{max} - \lambda_{min})x/L$$

dans laquelle $\lambda_{min}$ et $\lambda_{max}$ sont les périodes spatiales minimale et maximale dans le motif imprimé, et L est la longueur totale du motif.

8.  Procédé selon la revendication 4, **caractérisé en ce que** la variation de période $\lambda(x)$ est conforme à la fonction :

$$\lambda(x) = \lambda_{min} + (\lambda_{max} - \lambda_{min})(x/L)^{1/4}$$

dans laquelle $\lambda_{min}$ et $\lambda_{max}$ sont les périodes spatiales minimale et maximale dans le motif imprimé, et L est la longueur totale du motif.

9. Procédé selon l'une des revendications 1 à 8, **caractérisé en ce que** le calcul de la viscosité est fait de la manière suivante :

- on calcule les coefficients de la transformée de Fourier discrète de la topographie mesurée sur le motif imprimé avant fluage,
- on en déduit des coefficients théoriques d'une transformée de Fourier d'une topographie après fluage selon une formule de calcul faisant intervenir un paramètre de viscosité, en faisant varier le paramètre de viscosité, pour aboutir à plusieurs séries de coefficients théoriques liées chacune à une viscosité hypothétique respective,
- on calcule une série de coefficients expérimentaux de la transformée de Fourier de la topographie mesurée après fluage,
- on effectue une recherche de corrélation optimale entre la série de coefficients expérimentaux et les différentes séries de coefficients théoriques, et on en déduit une viscosité fournissant la meilleure corrélation.

10. Procédé selon la revendication 9, **caractérisé en ce que** la formule de calcul d'un coefficient théorique d'ordre n de la transformée de Fourier pour une viscosité hypothétique $\eta$ est :

$$a_n^{tflu}(\eta) = a_n^0 \exp(-t_{flu}/\tau_n)$$

où $a_n^{tflu}(\eta)$ est le coefficient de Fourier théorique d'ordre n de la topographie après fluage pendant une durée $t_{flu}$, $a_n^0$ est le coefficient d'ordre n de la topographie mesurée sur le motif imprimé après fluage, et $\tau_n$ est un coefficient de relaxation de la couche, lié à la viscosité $\eta$ par la relation

$$\tau_n = 3\eta(1/\gamma h_0^3)(L/2\pi n)^4$$

dans lequel:
$\gamma$ est la tension de surface de la couche mince ; $h_0$ est son épaisseur moyenne, et L est la longueur totale du motif imprimé.

11. Procédé selon la revendication 9, **caractérisé en ce que** la formule de calcul d'un coefficient théorique d'ordre n de la transformée de Fourier pour une viscosité hypothétique $\eta$ est :

$$a_n^{tflu}(\eta) = a_n^0 \exp(-t_{flu}/\tau_n)$$

où $a_n^{tflu}(\eta)$ est le coefficient de Fourier théorique d'ordre n de la topographie après fluage pendant une durée $t_{flu}$, $a_n^0$ est le coefficient d'ordre n de la topographie mesurée sur le motif imprimé après fluage, et $\tau_n$ est un coefficient de relaxation de la couche, lié à la viscosité $\eta$ par la relation

$$\tau_n = \tau_{relax} + 3\eta(1/\gamma h_0^3)(L/2\pi n)^4$$

dans lequel:
$\gamma$ est la tension de surface de la couche mince ; $h_0$ est son épaisseur moyenne, et L est la longueur totale du motif imprimé, et $\tau_{relax}$ est un temps caractéristique de relaxation de contraintes élastiques, le calcul étant effectué pour différentes viscosités hypohétiques $\eta$ et différents temps caractéristiques $\tau_{relax}$ et un couple d'une viscosité $\eta_{opt}$ et d'un temps caractéristique optimal $\tau_{relax-opt}$ étant sélectionné dans la recherche de corrélation optimale.

12. Procédé selon la revendication 11, **caractérisé en ce qu'**on calcule en outre un module d'élasticité du matériau en couche mince par la formule :

$$E = \eta_{opt} / \tau_{relax\text{-}opt}$$

**13.** Procédé selon la revendication 1, **caractérisé en ce qu'**on observe la position d'un front de fluage le long d'un motif dont la période varie continûment et on déduit de cette position une valeur de la viscosité.

**14.** Procédé selon l'une des revendications 1 à 13, **caractérisé en ce que** la même couche mince est utilisée pour plusieurs mesures successives à une même température de mesure pendant des durées successives ou à des températures différentes.

**Claims**

**1.** A method for measuring the viscosity of a material in a thin layer at at least one measurement temperature Tm, comprising the formation of a thin layer (12) of the material on a substrate (10), the impression by molding or etching of a known geometrical pattern in the thin layer, the thin layer being in the solid state at the end of the impression step, a measurement of the initial topography of the impressed pattern over the entire length of the pattern along a determined direction, heating to the measurement temperature Tm for a determined creep time $t_{flu}$, subsequent cooling to a solidification temperature of the layer, measurement of the topography resulting from the crept pattern, and mathematical processing of the topography measurements in order to deduce therefrom a value of viscosity at the measurement temperature, this method being **characterized in that** the impressed pattern of known geometry is an aperiodic pattern.

**2.** The method as claimed in claim 1, **characterized in that** the pattern is completely aperiodic and does not include locally periodic zones.

**3.** The method as claimed in claim 1, **characterized in that** the pattern is partially aperiodic and includes locally periodic subpatterns having different periods to one another.

**4.** The method as claimed in one of claims 1 to 3, **characterized in that** the geometrical pattern impressed in the thin layer consists of parallel grooves extending in a direction Oy perpendicular to a topography measurement direction Ox and having a rectangular cross section in a plane perpendicular to Oy and passing through Ox, the parallel grooves having a spatial period $\lambda(x)$ which is variable along the axis Ox, the spatial period being the length, in the direction Ox, of a groove and a plateau separating it from the following groove.

**5.** The method as claimed in claim 4, **characterized in that** the variation of the period $\lambda(x)$ conforms to the function:

$$1/\lambda(x) = 1/\lambda_{max} + (1/\lambda_{min} - 1/\lambda_{max})x/L$$

in which $\lambda_{min}$ and $\lambda_{max}$ are the minimum and maximum spatial periods in the impressed pattern, and L is the total length of the pattern.

**6.** The method as claimed in claim 4, **characterized in that** the variation of the period $\lambda(x)$ conforms to the function:

$$\lambda(x) = \lambda_{min}(\lambda_{max}/\lambda_{min})^{x/L}$$

in which $\lambda_{min}$ and $\lambda_{max}$ are the minimum and maximum spatial periods in the impressed pattern, and L is the total length of the pattern.

**7.** The method as claimed in claim 4, **characterized in that** the variation of the period $\lambda(x)$ conforms to the function:

$$\lambda(x) = \lambda_{min} + (\lambda_{max} - \lambda_{min})x/L$$

in which $\lambda_{min}$ and $\lambda_{max}$ are the minimum and maximum spatial periods in the impressed pattern, and L is the total length of the pattern.

8. The method as claimed in claim 4, **characterized in that** the variation of the period $\lambda(x)$ conforms to the function:

$$\lambda(x) = \lambda_{min} + (\lambda_{max} - \lambda_{min}) \, (x/L)^{1/4}$$

in which $\lambda_{min}$ and $\lambda_{max}$ are the minimum and maximum spatial periods in the impressed pattern, and L is the total length of the pattern.

9. The method as claimed in one of claims 1 to 8, **characterized in that** the viscosity is calculated in the following way:

   - the coefficients of the discrete Fourier transform of the topography measured on the impressed pattern before creep are calculated,
   - theoretical coefficients of a Fourier transform of a topography after creep are deduced therefrom according to a calculation formula involving a viscosity parameter, while varying the viscosity parameter in order to obtain a plurality of series of theoretical coefficients, each associated with a respective hypothetical viscosity,
   - a series of experimental coefficients of the Fourier transform of the topography measured after creep is calculated,
   - a search is carried out for optimal correlation between the series of experimental coefficients and the various series of theoretical coefficients, and a viscosity providing the best correlation is deduced therefrom.

10. The method as claimed in claim 9, **characterized in that** the formula for calculating an $n^{th}$ order theoretical coefficient of the Fourier transform for a hypothetical viscosity $\eta$ is:

$$a_n^{tflu}(\eta) = a_n^0 \exp(-t_{flu}/\tau_n)$$

where $a_n^{tflu}(\eta)$ is the $n^{th}$ order theoretical Fourier coefficient of the topography after creep for a time $t_{flu}$, $a_n^0$ is the $n^{th}$ order coefficient of the topography measured on the impressed pattern after creep, and $\tau_n$ is a relaxation coefficient of the layer, associated with the viscosity $\eta$ by the relationship

$$\tau_n = 3\eta(1/\gamma h_0^3)(L/2\pi n)^4$$

in which:
$\gamma$ is the surface tension of the thin layer; $h_0$ is its average thickness, and L is the total length of the impressed pattern.

11. The method as claimed in claim 9, **characterized in that** the formula for calculating an $n^{th}$ order theoretical coefficient of the Fourier transform for a hypothetical viscosity $\eta$ is:

$$a_n^{tflu}(\eta) = a_n^0 \exp(-t_{flu}/\tau_n)$$

where $a_n^{tflu}(\eta)$ is the $n^{th}$ order theoretical Fourier coefficient of the topography after creep for a time $t_{flu}$, $a_n^0$ is the $n^{th}$ order coefficient of the topography measured on the impressed pattern after creep, and in is a relaxation coefficient of the layer, associated with the viscosity $\eta$ by the relationship

$$\tau_n = \tau_{relax} + 3\eta(1/\gamma h_0^3)(L/2\pi n)^4$$

in which:
$\gamma$ is the surface tension of the thin layer; $h_0$ is its average thickness, and L is the total length of the impressed pattern, and $\tau_{relax}$ is a characteristic relaxation time of elastic strains, the calculation being carried out for various hypothetical viscosities $\eta$ and various characteristic times $\tau_{relax}$, and an optimal pairing of a viscosity $\eta_{opt}$ and a characteristic time $\tau_{relax-opt}$ being selected in the optimal correlation search.

**12.** The method as claimed in claim 11, **characterized in that** a modulus of elasticity of the material in a thin layer is furthermore calculated by the formula:

$$E = \eta_{opt} / \tau_{relax\text{-}opt}.$$

**13.** The method as claimed in claim 1, **characterized in that** the position of a creep front along a pattern whose period varies continuously is observed, and a value of the viscosity is deduced from this position.

**14.** The method as claimed in one of claims 1 to 13, **characterized in that** the same thin layer is used for a plurality of successive measurements at the same measurement temperature for successive times, or at different temperatures.

**Patentansprüche**

**1.** Verfahren zum Messen der Viskosität eines dünnen Filmmaterials bei wenigstens einer Messtemperatur Tm, das Folgendes beinhaltet: Bilden eines dünnen Films (12) des Materials auf einem Substrat (10), Drucken, durch Pressen oder Gravieren, eines Motivs einer bekannten Geometrie in den dünnen Film, wobei der dünne Film am Ende des Druckschritts im festen Zustand ist, Messen der Anfangstopografie des gedruckten Motivs über die gesamte Länge des Motivs in einer bestimmten Richtung, Erhitzen auf die Messtemperatur Tm für eine bestimmte Fließdauer $T_{flu}$, danach Abkühlen auf eine Erstarrungstemperatur des Films, Messen der resultierenden Topografie des zerflossenen Motivs und mathematisches Verarbeiten der Topografiemesswerte, um davon einen Wert für die Viskosität bei der Messtemperatur abzuleiten, wobei das Verfahren **dadurch gekennzeichnet ist, dass** das gedruckte Motiv von bekannter Geometrie ein aperiodisches Motiv ist.

**2.** Verfahren nach Anspruch 1, **dadurch gekennzeichnet, dass** das Motiv vollkommen aperiodisch ist und keine örtlich periodischen Zonen aufweist.

**3.** Verfahren nach Anspruch 1, **dadurch gekennzeichnet, dass** das Motiv teilweise aperiodisch ist und örtlich periodische Submotive mit voneinander getrennten Perioden aufweist.

**4.** Verfahren nach einem der Ansprüche 1 bis 3, **dadurch gekennzeichnet, dass** das in die dünne Folie gedruckte geometrische Motiv von parallelen Rillen gebildet wird, die in einer Richtung Oy lotrecht zu einer Topografiemessrichtung Ox verlaufen und einen rechteckigen Querschnitt in einer Ebene hat, die lotrecht zu Oy ist und durch Ox verläuft, wobei die parallelen Rillen eine räumliche Periode $\lambda(x)$ haben, die entlang der Achse Ox variabel ist, wobei die räumliche Periode die Länge in der Richtung Ox einer Rille und eines sie von der nachfolgenden Rille trennenden Stegs aufweist.

**5.** Verfahren nach Anspruch 4, **dadurch gekennzeichnet, dass** die Variation von Periode $\lambda(x)$ der folgenden Funktion entspricht:

$$1/\lambda(x) = 1/\lambda_{max} + (1/\lambda_{min} - 1/\lambda_{max})x/L$$

wobei $\lambda_{min}$ und $\lambda_{max}$ die minimale und die maximale räumliche Periode in dem gedruckten Motiv sind und L die Gesamtlänge des Motivs ist.

**6.** Verfahren nach Anspruch 4, **dadurch gekennzeichnet, dass** die Variation von Periode $\lambda(x)$ der folgenden Funktion entspricht:

$$\lambda(x) = \lambda_{min}(\lambda_{max}/\lambda_{min})^{x/L}$$

wobei $\lambda_{min}$ und $\lambda_{max}$ die minimale und die maximale räumliche Periode in dem gedruckten Motiv sind und L die Gesamtlänge des Motivs ist.

7. Verfahren nach Anspruch 4, **dadurch gekennzeichnet, dass** die Variation von Periode λ(x) der folgenden Funktion entspricht:

$$\lambda(x) = \lambda_{min} + (\lambda_{max} - \lambda_{min})x/L$$

wobei $\lambda_{min}$ und $\lambda_{max}$ die minimale und die maximale räumliche Periode in dem gedruckten Motiv sind und L die Gesamtlänge des Motivs ist.

8. Verfahren nach Anspruch 4, **dadurch gekennzeichnet, dass** die Variation von Periode λ(x) der folgenden Funktion entspricht:

$$\lambda(x) = \lambda_{min} + (\lambda_{max} - \lambda_{min})(x/L)^{1/4}$$

wobei $\lambda_{min}$ und $\lambda_{max}$ die minimale und die maximale räumliche Periode in dem gedruckten Motiv sind und L die Gesamtlänge des Motivs ist.

9. Verfahren nach einem der Ansprüche 1 bis 8, **dadurch gekennzeichnet, dass** die Berechnung der Viskosität auf die folgende Weise erfolgt:

   - Berechnen der Koeffizienten der diskreten Fourier-Transformation der gemessenen Topografie auf dem gedruckten Motiv vor dem Fließen,
   - Ableiten der theoretischen Koeffizienten einer Fourier-Transformation einer Topografie nach dem Fließen davon gemäß einer Rechenformel, die einen Viskositätsparameter berücksichtigt, unter Veränderung des Viskositätsparameters, um mehrere Serien von theoretischen Koeffizienten zu erlangen, die mit einer jeweiligen hypothetischen Viskosität verbunden sind,
   - Berechnen einer Serie von experimentellen Koeffizienten der Fourier-Transformation der nach dem Fließen gemessenen Topografie,
   - Durchführen einer Suche nach der optimalen Korrelation zwischen der Serie von experimentellen Koeffizienten und den verschiedenen Serien von theoretischen Koeffizienten, und Ableiten einer Viskosität davon, die die beste Korrelation ergibt.

10. Verfahren nach Anspruch 9, **dadurch gekennzeichnet, dass** die Rechenformel eines theoretischen Koeffizienten der Ordnung n der Fourier-Transformation für eine hypothetische Viskosität η wie folgt lautet:

$$a_n^{tflu}(\eta) = a_n^0 \exp(-t_{flu}/\tau_n)$$

wobei $a_n^{tflu}(\eta)$ der theoretische Fourier-Koeffizient der Ordnung n der Topografie nach dem Fließen für eine Dauer $t_{flu}$ ist, $a_n^0$ der Koeffizient der Ordnung n der auf dem gedruckten Motiv nach dem Fließen gemessenen Topografie ist und $\tau_n$ ein Entspannungskoeffizient des Films ist, der mit der Viskosität η durch die Relation

$$\tau_n = 3\eta(1/\gamma h_0^3)(L/2\pi n)^4$$

verbunden ist, wobei:
γ die Oberflächenspannung des dünnen Films ist; $h_0$ seine mittlere Dicke ist und L die Gesamtlänge des gedruckten Motivs ist.

11. Verfahren nach Anspruch 9, **dadurch gekennzeichnet, dass** die Rechenformel für einen theoretischen Koeffizienten der Ordnung n der Fourier-Transformation für eine hypothetische Viskosität η wie folgt lautet:

$$a_n^{tflu}(\eta) = a_n^0 \exp(-t_{flu}/\tau_n)$$

wobei $a_n^{tflu}(\eta)$ der theoretische Fourier-Koeffizient der Ordnung n der Topografie nach dem Fließen für eine Dauer $t_{flu}$ ist, $a_n^0$ der Koeffizient der Ordnung n der auf dem gedruckten Motiv nach dem Fließen gemessenen Topografie ist und $\tau_n$ ein Entspannungskoeffizient des Films ist, der mit der Viskosität $\eta$ durch die Relation

$$\tau_n = \tau_{relax} + 3\eta(1/\gamma h_0{}^3)(L/2\pi n)^4$$

verbunden ist, wobei:

$\gamma$ die Oberflächenspannung des dünnen Films ist; $h_o$ seine mittlere Dicke ist und L die Gesamtlänge des gedruckten Motivs ist und $\tau_{relax}$ eine charakteristische Entspannungszeit nach elastischen Beanspruchungen ist, wobei die Berechnung für verschiedene hypothetische Viskositäten $\eta$ und verschiedene charakteristische Zeiten $\tau_{relax}$ durchgeführt wird und ein Paar aus einer Viskosität $\eta_{opt}$ und einer optimalen charakteristischen Zeit $\tau_{relax\text{-}opt}$ bei der Suche nach der optimalen Korrelation ausgewählt wird.

12. Verfahren nach Anspruch 11, **dadurch gekennzeichnet, dass** ferner ein Elastizitätsmodul des Materials des dünnen Films mit der folgenden Formel berechnet wird:

$$E = \eta_{opt}/\tau_{relax\text{-}opt}$$

13. Verfahren nach Anspruch 1, **dadurch gekennzeichnet, dass** die Position einer Fließfront entlang eines Motivs beobachtet wird, dessen Periode kontinuierlich variiert wird, und von dieser Position ein Wert für die Viskosität abgeleitet wird.

14. Verfahren nach einem der Ansprüche 1 bis 13, **dadurch gekennzeichnet, dass** derselbe dünne Film für mehrere aufeinander folgende Messungen bei derselben Messtemperatur für aufeinander folgende Dauern oder bei unterschiedlichen Temperaturen verwendet wird.

**Fig. 1**

**Fig. 2**

**Fig. 3**

**Fig. 4**

**5A**

**5B**

**5C**

**5D**

**5E**

**5F**

**5G**

# Fig. 5

Profil ——————
Enveloppe ··············

Front de fluage

Pente

Zone non fluée

Zone fluée

$h_0$

$x_\alpha$

L

x

**Fig. 6**

L = 40 μm

$\lambda_{min}$ = 417 nm

$\lambda_{max}$ = 4,6 μm

**Fig. 7**

**Fig. 8**

EP 2 378 264 B1

**EP 2 378 264 B1**

## RÉFÉRENCES CITÉES DANS LA DESCRIPTION

**Documents brevets cités dans la description**

- US 5798452 A
- EP 2110360 A
- FR 2936360
- EP 0801734 A